# EUROPEAN PATENT APPLICATION

(11) **EP 2 335 822 A2**
(43) Date of publication of application: **22.06.2011**
(21) Application number: 09818048.2
(22) Date of filing: 20.11.2009
(51) Int. Cl.: B01J 23/44, B01J 21/18, B01J 21/12, B01J 37/03, B01J 37/16

(54) **METHOD FOR PRODUCING PALLADIUM-CONTAINING CATALYSTS**

(30) Priority: 29.09.2008 RU 2008138409
(71) Applicant: Bonsanco Technologies AG, 1204 Genève (CH)
(72) Inventor: UKRAINTSEV, Valery Borisovich, St.Petersburg 192238 (RU)
(74) Representative: Dunleavy, Kevin James
(86) International application number: PCT/RU2009/000637
(87) International publication number: WO 2010/039062

(57) **Abstract**

The invention relates to physical chemistry and can be used for controlling the rate of catalytic hydrogenation and oxidation reactions.

The technical result consists in the substantial simplification of a process for producing the required catalyst and in the process safety owing to the substitution of difficult-to-make tetra aquapalladium (II) perchlorate and a reducing agent.

The method for producing a palladium-containing catalyst involves isolating bivalent palladium from an initial solution and precipitating the reduced palladium on a carrier.

Palladium (II) chloride PdCl₂ is used as initial compound, the reduction of palladium (II) to palladium (0) and the precipitation thereof on the carrier is carried out using ferrous sulphate (II), and carbonaceous or aluminosilicate materials are used as carriers.

Fullerene, carbon black and shungite, which contain oxides of aluminium, silicon and other elements as well as carbon, are used as carbonaceous materials. The aluminosilicate materials are in the form of slurry (a by-product of bauxite processing).

## Description

### FIELD OF THE INVENTION

The invention relates to physical chemistry and can be used for controlling the rate of catalytic hydrogenation and oxidation reactions.

### PRIOR ART

Palladium on carbon (hereinafter referred to as Pd/C) is known for its high catalytic activity in organic compound hydrogenation reactions [Tsuji J. Palladium reagents and catalysts-innovations in organic syntheses. John Wiley & Sons, Chichester. 1995. 595p.]. According to the written publications known in the art, about 75% of industrial hydrogenation processes are carried out using the Pd/C catalyst which contains 5% of metal palladium [Grove D.E. Plat. Met., 2002, 46, (1) 48.]. For example, Pd/C is used in ultimate gasoline manufacture, the food and pharmaceutical industries, fine organic synthesis, etc. The catalysts with palladium applied on metal oxide carriers (oxides of aluminum, silicon, titanium, etc.) find application in gas afterburning processes. The catalytic activity depends on the structure and dispersion of carrier as well as on the method of palladium application on its surface. As a rule, the higher dispersion of material results in the higher catalytic activity of the system.

From the classical point of view, as the particle size decreases, the specific surface area increases in the system and the properties of the bulk phase remain unchanged. The particle size reduction causes an increase in the vapor equilibrium pressure and solubility, a change of melting points and temperatures of other phase transitions as well as an alteration of a number of the system's extensive properties connected with the flow of such processes on its surface as adsorption and catalysis which are proportional to the specific surface. The specific surface of particles rises steeply as their size approaches the atomic one that is connected with a considerable increase in the number of atoms forming the particle surface. The size effect is revealed even in such properties of compounds as their catalytic activity or reactivity: the particle size reduction may result in both a steep increase and a sharp reduction of specific activity, i.e. the activity per metal atom. As a rule, this effect is strongly pronounced in clusters. The size effect often depends on the nature of the initial compound (precursor) which is a source of one or another metal to be applied to the appropriate carrier.

In the last few years, there has been a particular interest in the study of physical and chemical properties of palladium nanoparticles (B.G. Yershov Advance in Chemistry, 2004, 73,107; N.R. Jana, Z.L. Wang, T.Pal, Langmuir., 2000,16,2457) that is driven by their participation in the catalytic processes. As established in the paper (V.B. Ukraintsev, K.A. Khokhryakov, Russian Chemical Journal (Journal of D.I. Mendeleev Russian Society), 2006. mL., No.4, p.154) and in the RF patents Nos. 2240182, 2258561, 2326730, the application of nanoscale palladium to carbon and metal oxide carriers leads to a considerable increase in the catalytic activity in comparison with the similar commercial catalysts.

Patent No. 2258561 dated 20 August, 2005, B01J 23/44, "Method for Producing Palladium-Containing Hydrogenation Catalyst," was used as a prototype. According to the patent, the method for producing a palladium-containing hydrogenation catalyst consists in reducing bivalent palladium from an initial compound to zerovalent palladium using hydrogen and in precipitating the reduced palladium on a carbon material, wherein tetra aqua-palladium (II) perchlorate is used as initial compound, nanocluster carbon is used as carbonaceous material, and the reduction of palladium from the initial compound and the precipitation of reduced zerovalent palladium on the carbonaceous material is carried out in batches.

The following method of preparing aqua-palladium (II) perchlorate solution is known:
2-3 ml of distilled water are added to 1 g of palladium chloride in a 100 ml beaker to obtain a suspension. Then 3-4 ml of concentrated hydrochloride acid is added in portions to the suspension under constant stirring and heating on a hot rangette. The solution is then stirred and heated until the complete dissolution of palladium salt. The obtained solution is mixed with caustic-soda solution (40 g/I) up to pH =6-7 by stirring and heating. The caustic soda is added until the brown sediment of palladium hydroxide stops dropping out. At the conclusion, the mother solution shall be almost colourless. The beaker is cooled to room temperature following which the mother solution is decanted from the sediment to sewer.

The sediment is mixed with 10 ml of distilled water and stirred up; and the prepared suspension is brought to a centrifuge. The sediment is centrifuged, the mother solution after centrifugation is decanted to sewer, the sediment is mixed with another 10 ml of distilled water and centrifuged again. These procedures are repeated, usually 12-15 times, until the negative reaction to chloride ions with silver ions (1 % silver nitrate solution) is achieved.

Wet sediment washed from chloride ions is placed in a 50 ml beaker and mixed with two 5 ml portions of 710 g/I aqueous perchloric acid solution (chemically pure). The acid is added gradually under constant stirring and heating on rangette to almost boiling condition. The solution is then stirred and heated until the complete dissolution of palladium hydroxide. Upon dissolving the sediment and obtaining a light brown solution, stirring and heating are stopped and the beakers are cooled to room temperature. The solution is then filtered using a fritted glass filter (Schott filter No. 4) and placed in 100 ml graduated flask; the distilled water is used to make up the remaining volume. The concentration of tetra aqua-palladium (II) perchlorate is measured using the spectrophotometric method. The obtained solution shall be kept closed in a dark place. The synthesis time is 2-3 days.

The initial tetra aqua-palladium (II) perchlorate compound exists only in aqueous perchlorate solution. From the chemical and technological point of view, its synthesis is rather complicated, that is why it is not manufactured. The nanoscale palladium is applied on carriers subject to reduction with hydrogen. The use of this method in industry is difficult.

### DISCLOSURE OF THE INVENTION

The invention is aimed at developing a method for producing a palladium-containing catalyst.

The technical result of this invention consists in the substantial simplification of the process for producing the required catalyst and in the said process safety owing to the substitution of difficult-to-make tetra aquapalladium (II) perchlorate and a reducing agent.

According to the invention, this problem may be solved by isolating the bivalent palladium from the initial solution and precipitating the reduced palladium on the carrier in the course of palladium-containing catalyst production.

The palladium chloride (II) - PdCl₂ - is used as initial compound, the reduction of palladium (II) to palladium (0) and precipitation on carriers is effected using ferrous sulfate (II), and carbonaceous or aluminosilicate materials are used as carriers.

Fullerene, carbon black and shungite, which contain the oxides of aluminium, silicon and other elements, as well as carbon, are used as carbonaceous materials. The aluminosilicate materials are in the form of slurry (a by-product of bauxite processing).

The applicant hasn't found any sources of information containing data on engineering solutions identical to the present invention which would thus enable one to conclude that the invention conforms to the "novelty" criterion.

The embodiment of distinctive features of the invention has an important technical result: the use of palladium chloride (II) PdCl₂ as initial compound and further palladium reduction and precipitation on carriers using the ferrous sulfate (II) allows substantial simplification of the process of producing the required catalyst and ensures process safety.

Process safety is improved due to the substitution of explosive hydrogen reducing agent with ferrous sulfate (II) and a sharp reduction of perchloric acid.

The applicant hasn't found any sources of information containing data on the influence of said distinctive features on the technical result achieved through their embodiment. In the applicant's opinion, this certifies the conformity of the engineering solution to the "inventive level" criterion.

### EXAMPLES

The method may be implemented as follows.

### Example 1.

A 4 I reactor is filled with 0.9 I of distilled water, 0.178 mg of palladium chloride and 2 ml of 10.5 M perchloric acid solution (HClO₄). The obtained solution is heated to 40-50°C and constantly stirred until the complete dissolution of palladium chloride, during almost 0.5 h. Then 50 g of carrier - carbonaceous material - and 1.6 I of distilled water are added to the obtained solution. The slurry containing 80-87% of aluminum, 10-15% of silicon oxide, up to 4% titanium oxide, no more than 2% of ferrous oxides, no more than 0.35% of calcium oxide, no more than 0.2% magnesium oxide, no more than 0.25% of alkali metals is used as carrier.

The obtained suspension is stirred for 30 minutes. Then 300 ml of aqueous solution containing 2.78 g of FeSO₄·7H₂O (1.10⁻² M) is added using the separating funnel under constant stirring over 30 minutes. Mixed with ferrous sulfate, the suspension is then stirred during 0.5 h and the reactor feed settles over 12 h. Then the sediment is filtered, washed many times with distilled water and dried in a vacuum desiccator over P₂O₅ during two days and then finally dried in the drying oven at 110°C during 3 hrs.

The catalyst output is 98-99%.

### Example 2.

A palladium-containing catalyst wherein shungite which contains 60-70% of carbon, 30-40% of carbon black with 60-70% of carbon, 30-40% of carbon black with 35-50% of silicon oxide, 10-25% of aluminum oxide, 4-6% of titanium oxide, and the admixtures of other elements is used as carrier for palladium (0) precipitation is produced in a similar manner as according to the method described in example 1.

The catalyst output is 98-99%.

### Example 3

A palladium-containing catalyst wherein carbonaceous material including fullerene C₆₀ the fraction of which in the samples was at least 99.5% with a specific surface of 90-100m², apparent density of 0.77 g/cm³ and pycnometric specific gravity of 2.10 g/cm³ is used as carrier for palladium (0) precipitation is produced in the same manner as according to the method described in example 1.

The catalyst output is 98-99%.

### Example 4

A palladium-containing catalyst wherein carbon black - a carbonaceous material remaining after the extraction of a cathode deposit of fullerenes and containing up to 10-20% of C₆₀ ,C₇₀ fullerenes and nanotubes - is used as carrier for palladium (0) precipitation is produced in the same manner as according to the method described in example 1.

### INDUSTRIAL APPLICABILITY

Known simple industrial equipment and materials common in the art are used for implementation of the method.
1. The specific activity (number of reacted hydrogen moles per mole of Pd per sec) of catalysts containing the palladium on carbonaceous carriers is equal to 12 ± 2 and comparable with Engelhard commercial nickel catalyst in case of sunflower oil hydrogenation.
2. The catalyst containing the palladium on slurry (palladium content - 0.2% of weight, mass - 100 g) was used in bench tests for reducing toxicity of gasoline engine exhaust. The reduction of content in exhaust gases is: CO-31 %, CH-19%, NOx-19%, the content of CO₂ increases by 23%.

## Claims

1. A method for producing a palladium-containing catalyst by isolating bivalent palladium from an initial solution and precipitating the reduced palladium on a carrier, wherein palladium (II) chloride is used as a starting material, the reduction of palladium (II) to palladium (0) and the precipitation thereof on the carrier is carried out using ferrous sulphate (II), and carbonaceous or aluminosilicate materials are used as carriers.

2. A method for producing a palladium-containing catalyst according to claim 1, wherein shungite, fullerone and carbon black are used as carbonaceous materials and the aluminosilicate material is in the form of a slurry.
